# EUROPEAN PATENT SPECIFICATION

(11) **EP 3 069 957 B1**
(45) Date of publication and mention of the grant of the patent: **13.12.2017**
(21) Application number: 16155244.3
(22) Date of filing: 11.02.2016
(51) Int. Cl.: B62B 5/00, B60L 11/18

(54) **ACTUATING DEVICE AND A PATIENT TRANSPORT DEVICE COMPRISING SUCH AN ACTUATING DEVICE**
BETÄTIGUNGSVORRICHTUNG UND PATIENTENTRANSPORTVORRICHTUNG MIT SOLCH EINER BETÄTIGUNGSVORRICHTUNG
DISPOSITIF D'ACTIONNEMENT ET DISPOSITIF DE TRANSPORT DE PATIENT COMPRENANT UN TEL DISPOSITIF D'ACTIONNEMENT

(30) Priority: 18.03.2015 NL 2014484
(43) Date of publication of application: 21.09.2016
(73) Proprietor: Human Care Nederland B.V., 8076 PA Vierhouten (NL)
(72) Inventor: Van Scheppingen, Mattheas Robertus, 8076 PA Vierhouten (NL)
(74) Representative: Peters, Sebastian Martinus

(56) References cited:
- EP-A2- 0 854 437
- EP-A2- 2 208 487
- DE-C1- 19 740 526
- US-B1- 6 276 471

## Description

### BACKGROUND

The invention relates to an actuating device, in particular for manually actuating the driving and steering of an object or vehicle. Such an actuating device is especially suitable for manually actuating a drive system for a patient transport device.

Patient transport devices, such as a hospital bed or a patient lift, are often heavy and difficult to maneuver. In order to reduce the physical effort required to move these transport devices, known patient transport devices are provided with a powered drive system. An example of such a power driven patient transport device is disclosed in EP 2.208.487 of the applicant. In order to operate such a transport device it is preferred to use a steering handle which is adapted for generating a signal representing one or more force components manually applied to the handle.

Such a handle is, for example, disclosed in US 6,276,471. This Patent publication discloses a delivery cart comprising a chassis, one or two castors pivotable about a vertical axis, two support wheels for supporting the chassis on a ground, and a gearless, load-actuated reversible electric motor formed integrally with the respective support wheels. The cart further comprises a control system for controlling power supply to the electric motors, and a displacement stirrup which is formed as a shaft pole provided with a single handle. The handle is provided with a first pair of force meters for sensing displacement forces applied to the shaft pole in a longitudinal direction of the cart, and a second pair of force meters for sensing steering forces applied to the shaft pole in a direction transverse to the longitudinal direction of the cart. Each of the force meters is formed of strips of a foil material an electric resistance of which changed dependent on a pressure force applied to a horizontal surface thereof. The handle has a grip bar comprising a vertical extending square-shaped member. The force meters of the first pair of force meters and the force meters of the second pair of the force meters are arranged opposite each other in a respective direction on the square-shaped member. The grip bar of the handle has a sheathing which is elastically deformable.

A disadvantage of the handle of the prior art is that it is more or less incidental which fraction of a manual driving force applied to the grip bar is transferred to the respective force meters, this structure does not allow a reliable and accurate control of the driving motors, which is an absolute requirement for moving and/or lifting patients.

DE 197 40 526 C1 discloses an actuator, in particular for a steering column lever in motor vehicles, for performing switching functions. The actuator has a lever, whose first end is mounted in a bore and has a bearing point in an end region of the bore. A combined pull- and pressure-sensor in the bore's end region between the first leper end and a stop detects the axial forces on the second lever end. A cam in the bore at a distance from the bearing point forms an intermediate part of the lever. Several pressure sensors are arranged in a ring around the bore at the level of the cam to detect forces acting radially on the second lever end. An evaluation unit converts switching instructions depending on sensor measurement values. In an embodiment, the actuator comprises resilient intermediate members arranged in the radial direction between the cam and the pressure sensors.

It is an object of the present invention to provide a reliable and accurate manual actuating device, in particular for use on a patient transport devices.

### SUMMARY OF THE INVENTION

According to a first aspect, the invention provides an actuating device for manually actuating driving and steering means for a wheeled power driven object or vehicle, as further disclosed in claim 1, said actuating device comprising:
a substantially rigid center shaft which is arranged for rigid attachment to said object or vehicle,
a series of pressure sensors which are arranged on an outer surface of said center shaft and are distributed over a circumferential area of said center shaft,
an elastically deformable sleeve which is arranged substantially around said center shaft and said series of pressure sensors, and
a substantially rigid cylinder which is arranged around said elastically deformable sleeve, wherein the elastically deformable sleeve is arranged in contact with the outer surface of the center shaft and with an inner surface of the cylinder.

When a manually actuating force is applied on the substantially rigid cylinder, said cylinder elastically deforms the sleeve, which provides an actuating pressure force to one or more of said pressure sensors arranged on the circumferential area of the center shaft. Due to the substantially rigid cylinder, the manual driving force applied to the cylinder provides a movement of the cylinder with respect to the center shaft only in the direction of the applied manual driving force, and consequently provides an actuating pressure force on the center shaft only in the direction of the applied manual driving force. Although this actuating pressure force may be distributed over more than one pressure sensor arranged on the center shaft, these pressure sensor(s) are univocally actuated which provides a reliable and accurate control of driving and steering means for a wheeled power driven object or vehicle.

According to the invention, the pressure sensors of said series of pressure sensors is arranged at a distance from the elastically deformable sleeve, at least when no manually actuating force is applied on the substantially rigid cylinder. When not manually actuated, the actuating device is arranged in a neutral position. According to this embodiment, the elastically deformable sleeve does not touch the pressure sensors when the actuating device is in the neutral position. Thus in the neutral position, no pressure is applied to any one of the pressure sensors, which provides an univocal and reliable determination of the actuating device in the neutral position.

Although the center shaft may comprise a circular or a polygonal cross section, in an embodiment, the substantially rigid center shaft comprises a square shaped cross section. In an embodiment, the series of pressure sensors comprises four pressure sensors, wherein at each substantially flat outer side surface of said square shaped center shaft, one of said pressure sensors is arranged. In an embodiment, one of said substantially flat outer side surface of the square shaped center shaft is arranged to face in a direction of forward movement of the wheeled power driven object or vehicle. In this case the forward facing surface and the backward facing surface of the square shaped center shaft comprises sensors for substantially actuating the driving means for a wheeled power driven object or vehicle, whereas the sideward facing surfaces of the square shaped center shaft comprises sensors for substantially actuating the steering means for a wheeled power driven object or vehicle.

In an embodiment, the elastically deformable sleeve is arranged to substantially fill the space between the outer surface of the center shaft and the an inner surface of the cylinder, at least above and/or below said circumferential area. Above and/or below the circumferential area at which the pressure sensors are arranged on the center shaft, the space between the outer surface of the center shaft and the inner surface of the cylinder is filled with elastically deformable material of the sleeve. On the one hand, this provides a ring shaped part of the sleeve which keeps the center shaft substantially in the center of the cylinder, at least in the neutral position of the actuating device. On the other hand, this ring shaped part isolates and protects the sensors from ambient influences.

In an embodiment, the substantially rigid cylinder is movably attached to the center shaft, at least at a position at a distance above or below said circumferential area. Due to the attachment of the cylinder to the center shaft, the movement of the cylinder with respect to the center shaft is limited which provides a further improvement of the univocal actuating of the pressure sensors due a manually actuating of the cylinder.

In an embodiment, the rigid cylinder is attached to the center shaft by means of a ball-and-socket joint. In an embodiment, said actuating device comprises a ball member which is attached to the center shaft at a distance above or below said circumferential area, and wherein the substantially rigid cylinder comprises a socket member which is arranged at least partially around said ball member. The ball-and-socket joint allows to rotate the cylinder with respect to the center shaft. The elastically deformable sleeve limits the angle of rotation to a few degrees, for example 1,5 degrees. The rotation provides a pressure force on the pressure sensors on the center shaft, which pressure sensors are arranged at a distance from said ball-and socket joint.

In an embodiment, elastically deformable sleeve comprises a silicone-rubber sleeve.

In an embodiment, each pressure sensor of said series of pressure sensors comprises a strip of foil material comprising an electrical property, such as the electrical resistance, which varies dependent on a pressure force applied to the surface of said strip.

According to a second aspect, the present invention provides a patient transport device, comprising:
a chassis,
one or more support wheels for supporting the chassis on a ground,
at least one drive wheel provided with an electric motor for driving and/or steering said patient transport device, and
a control system for controlling power supply to the electric motors, wherein said control system comprises at least one actuating device according to the first aspect or an embodiment thereof as described above.

In an embodiment, the center shaft is rigidly attached to said chassis, or is a part of said chassis.

In an embodiment, the control system comprises a pair of mutually spaced actuating devices according to the first aspect or an embodiment thereof as described above. The two mutually spaced actuating devices are provided for fail safe reasons. The control system of this embodiment is controlled by both hands of an operator, which needs to manually actuate both actuating devices for driving and steering said patient transport device. When only one actuating device is actuated, this is considered by the control system as an unintentional activation and the control system will not activate the driving and/or steering of the patient transport device.

In an embodiment, the patient transport device comprises a patient lifting device or a hospital bed.

According to a third aspect, the present invention relates to a use of an actuating device according to the first aspect or an embodiment thereof as described above, for controlling power supply to the electric motors of a patient transport device according to the second aspect or an embodiment thereof as described above.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic cross section of an actuating device according to the invention;
Figure 2 shows a schematic cross section along the line II-II of figure 1;
Figure 3 shows the schematic cross section of figure 2 when an actuating force is applied;
Figure 4 shows a perspective view of a patient lift device comprising an actuating device of the invention; and
Figure 5 shows a partial bottom view of a hospital bed comprising an actuating device of the invention.

### DETAILED DESCRIPTION OF THE INVENTION

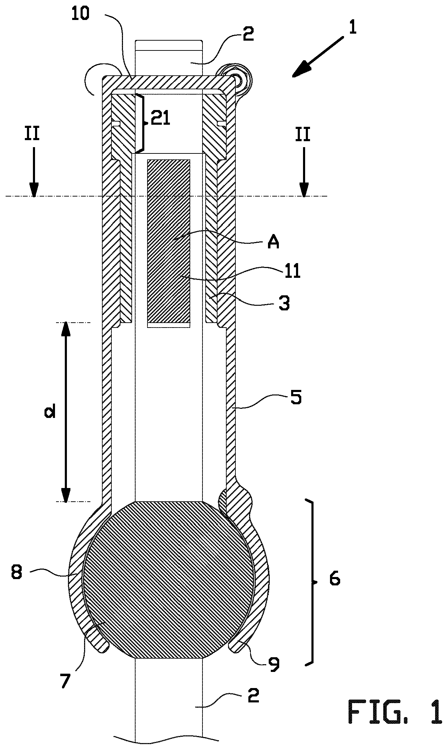

Figure 1 shows a schematic cross section of an actuating device 1, which is particularly suitable for manually actuating driving and steering means for an object or vehicle, in particular an patient transport device.

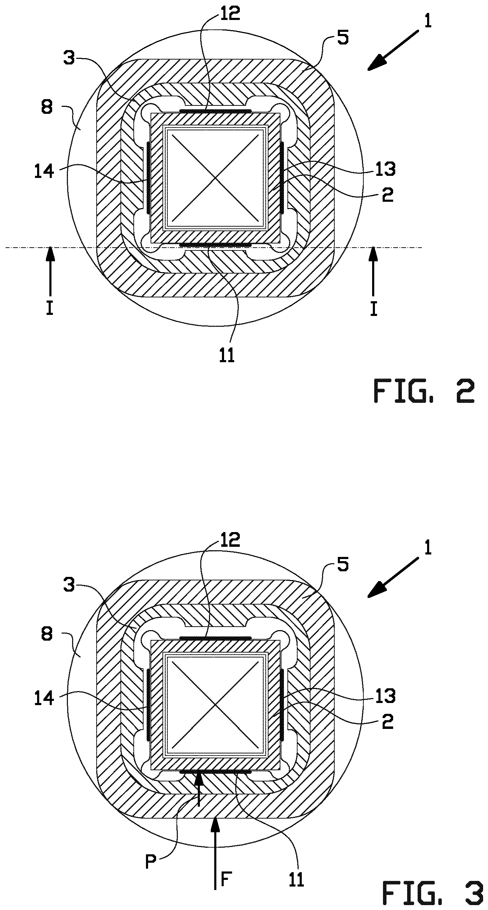

The actuating device 1 comprises a substantially rigid center shaft 2. In this example, the substantially rigid center shaft 2 comprises a square shaped cross section as schematically shown in figure 2. The center shaft 2 may be a solid shaft, however in the example shown in figure 2, the center shaft is hollow. This allows to arrange the cables for connecting the series of pressure sensors 11, 12, 13, 14 inside the center shaft 2.

The actuating device 1 comprises a series of pressure sensors 11, 12, 13, 14 which are arranged on an outer surface of said center shaft 2 and are distributed over a circumferential area of said center shaft 2. In the example shown in figures 1 and 2, the series of pressure sensors comprises four pressure sensors 11, 12, 13, 14. At each substantially flat outer side surface of said square shaped center shaft 2, one of said pressure sensors 11, 12, 13, 14 is arranged.

The actuating device 1 further comprises an elastically deformable sleeve 3, which is arranged substantially around said center shaft 2 and said series of pressure sensors 11, 12, 13, 14. Figure 2 shows the actuating device 1 in a neutral position when no manually actuating force is applied on the actuating device 1, in which neutral position the pressure sensors 11, 12, 13, 14 are arranged at a distance from the elastically deformable sleeve 3. The thin gap between the sleeve 3 and the pressure sensors 11, 12, 13, 14 ensures that no pressure is applied to any one of the pressure sensors 11, 12, 13, 14 when no manually actuating force is applied on the actuating device 1. The elastically deformable sleeve 3 is preferably made from silicone-rubber.

The actuating device 1 further comprises a substantially rigid cylinder 5 which is arranged around said elastically deformable sleeve 3. The elastically deformable sleeve 3 is arranged in contact with the outer surface of the center shaft 2, in particular in an area 21 above the position of the pressure sensors 11, 12, 13, 14, and with an inner surface of the cylinder 5. In the example shown in figures 1 and 2, the elastically deformable sleeve 3 is arranged to substantially fill the space between the outer surface of the center shaft 2 and the an inner surface of the cylinder 5, at the area 21 above the position of the pressure sensors 11, 12, 13, 14.

As shown in figure 1, the substantially rigid cylinder 5 is movably attached to the center shaft 2 by means of a ball-and-socket joint 6. The ball-and-socket joint 6 is arranged at a distance d from the pressure sensors 11, 12, 13, 14. The ball-and-socket joint 6 comprises a ball member 7 which is attached to the center shaft 2. The substantially rigid cylinder 5 comprises a socket member 8 at a proximal end 9 thereof, which socket member 8 is arranged at least partially around said ball member 7. The socket member 8 is rotatable around the ball member 7, which allows the cylinder 5 to rotate with respect to the center shaft 2. The cylinder 5 is preferably made from a rigid synthetic material or plastic.

When a manually actuating force is applied in a direction F on the substantially rigid cylinder 5, said cylinder 5 rotates around said ball-and-socket joint 6, which provides a displacement of the cylinder 5 at the distal end 10 thereof with respect to the center shaft 2. This displacement is counteracted by the elastically deforming sleeve 3. Due to the displacement, part of the sleeve 3 facing the direction F is pushed against one or more sensors 11 which provides an actuating pressure force P to one or more of said pressure sensors 11.

Due to the substantially rigid cylinder 5, the manual driving force applied to the cylinder 5 provides a movement of the cylinder 5 with respect to the center shaft 2 only in the direction F of the applied manual driving force as schematically shown in figure 3. This provides an actuating pressure force P on the center shaft 2 only in the direction F of the applied manual driving force. The pressure sensors 11, 12, 13, 14 comprises a strip of foil material comprising an electrical property, such as the electrical resistance, which varies dependent on a pressure force P applied to the surface A of said strip. By monitoring said electrical property of the pressure sensors 11, 12, 13, 14 it can be established whether or not an actuating force is applied. In addition the direction F of the applied driving force can be established by comparing the electrical properties of the separate sensors 11, 12, 13, 14 with respect to each other, and a magnitude of the applied driving force can be established by monitoring the magnitude of the change of the electrical properties of the pressure sensors 11, 12, 13, 14.

The pressure sensors 11, 12, 13, 14 are connect to an electronic circuit, which electronic circuit is arranged for monitoring the electrical properties and to provide an output for driving and steering of an object or vehicle.

As already indicated, the actuating device of the present invention is especially suitable for manually actuating a drive system for a patient transport device. Hospitalized patients or incapacitated persons are often moved about relatively long distances while lying on a bed or shorter distances using a for instance a patient lift device. These patient transport devices are often heavy and difficult to maneuver, especially when space is scarce. To reduce the physical effort required to move these patient supports, prior art inventions provide patient transport devices comprising powered drive systems.

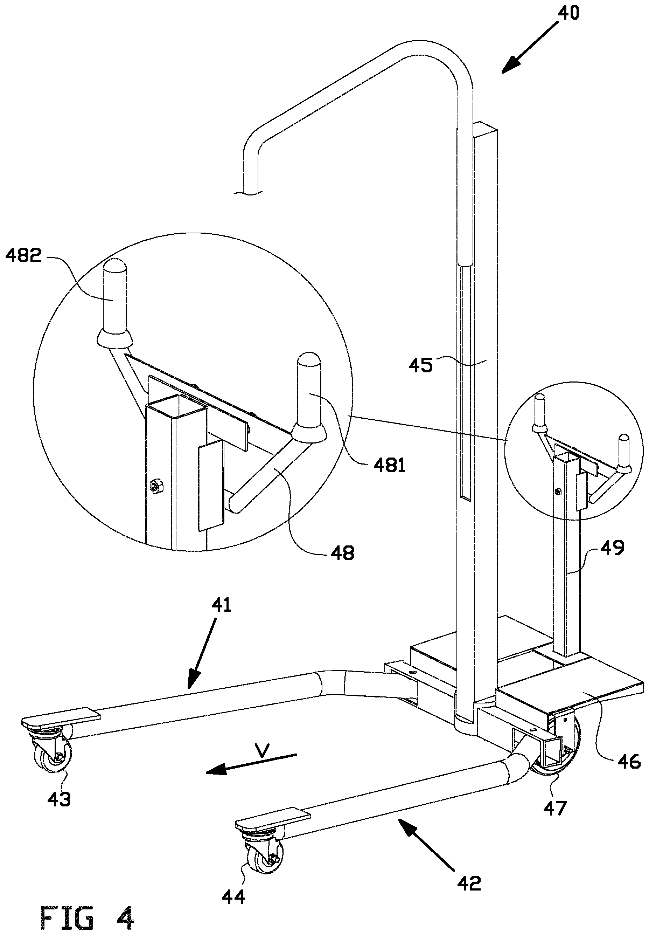

A first example of such a patient transport device is a patient lift device 40 as shown in figure 4. The patient lift device 40 comprises two support legs 41, 42 with castor wheels 43, 44 for supporting the patient lift device 40 on a ground. The support legs 41, 42 are attached to a central chassis part 46, which comprises at least one drive wheel 47 provided with an electric motor for driving and/or steering said patient lift device 40. The patient lift device 40 further comprises a lifting boom 45 for attaching a sling system as known in the art for lifting a person. A steering handle 48 is mounted on a support column 49 which in turn is mounted on the central chassis part 46. The steering handle 48 is rigidly connected to the support column 49 which is rigidly connected to the central chassis part 46.

The steering handle 48 is provided with a pair of mutually spaced actuating devices 481, 482 as described above with reference to figures 1, 2 and 3. The center shaft 2 is formed as on unit with the steering handle 48. The center shaft 2 inside the actuating devices 481, 482 comprises a square shaped cross section. In particular, one of said substantially flat outer side surface of the square shaped center shaft 2 is arranged to face in a direction V of forward movement of the patient lift device 40. In this case the forward facing surface and the backward facing surface of the square shaped center shaft 2 comprises sensors 11, 12 for substantially actuating the driving of the patient lift device 40, whereas the sideward facing surfaces of the square shaped center shaft comprises sensors 13, 14 for substantially actuating the steering of the patient lift device 40.

The steering handle 48 is provided with two mutually spaced actuating devices 481, 482 to operate the driving and steering of the patient lift device 40 using both hands of an operator. The operator needs to manually actuate both actuating devices 481, 482 for driving and steering said patient lift device 40. When only one of said actuating devices 481, 482 is actuated, this is considered by the control system as an unintentional activation and the control system will not activate the driving and/or steering of the patient lift device 40.

The actuating devices 481, 482 on the steering handle 48 are arranged for controlling power supply to the electric motors of the one or more drive wheels 47 for driving and/or steering of the patient lift device 40.

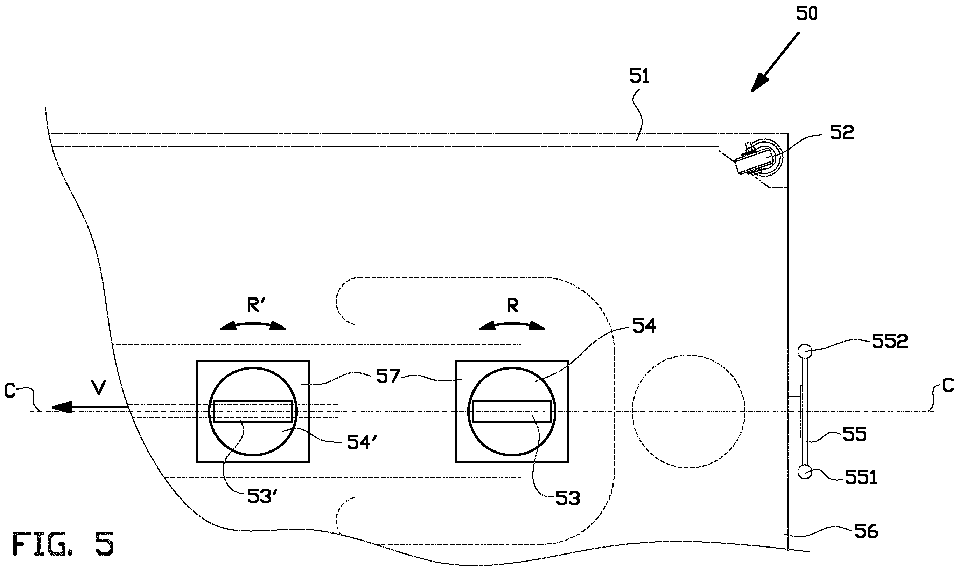

A second example of such a patient transport device is a hospital bed 50 as shown in figure 5. The hospital bed comprises a chassis 51, and supporting castor wheels 52 for supporting the chassis 51 on the ground. The hospital bed 50 is provided with two drive wheels 53, 53' provided with an electric motor for driving the hospital bed 50, and a rotation system 54, 54' for individually rotating R, R' the drive wheels 53, 53' for steering the hospital bed 50. The drive wheels are preferable arranged at a center line C of the hospital bed 50.

The hospital bed 50 further comprises a steering handle 55 which is mounted at a head end 56 of said hospital bed 50. The steering handle 55 is rigidly connected to the chassis 51 of the hospital bed 50. The steering handle 55 is provided with a pair of mutually spaced actuating devices 551, 552 as described above with reference to figures 1, 2 and 3. The center shaft 2 is formed as on unit with the steering handle 55. The center shaft 2 inside the actuating devices 551, 552 comprises a square shaped cross section. In particular, one of said substantially flat outer side surface of the square shaped center shaft 2 is arranged to face in a direction V of forward movement of the hospital bed 50. In this case the forward facing surface and the backward facing surface of the square shaped center shaft 2 comprises sensors 11, 12 for substantially actuating the driving of the hospital bed 50, whereas the sideward facing surfaces of the square shaped center shaft comprises sensors 13, 14 for substantially actuating the steering of the hospital bed 50.

The steering handle 55 is provided with two mutually spaced actuating devices 551, 552 to operate the driving and steering of the hospital bed using both hands of an operator. The operator needs to manually actuate both actuating devices 551, 552 for driving and steering said hospital bed 50. When only one of said actuating devices 551, 552 is actuated, this is considered by the control system as an unintentional activation and the control system will not activate the driving and/or steering of the hospital bed 50.

In figure 5 a bottom view of the drive system 57 is shown, which drive system is attached to the hospital bed 50. Although the steering handle 55 is preferably arranged at the head end 57 so that a patient can view in the forward moving direction V, the steering handle 55 may also be arranged at a food end of the hospital bed 50 so that the operator can observe the face of the patient.

The actuating devices 551, 552 on the steering handle 55 are arranged for controlling power supply to the electric motors of the drive wheels 53, 53' and the rotation systems 54, 54' for driving and/or steering of the hospital bed 50.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the present invention relates to an actuating device for manually actuating driving and steering means for a wheeled power driven object or vehicle. Such an actuating device is especially suitable for manually actuating a drive system for a patient transport device. Said actuating device comprises a substantially rigid center shaft which is arranged for rigid attachment to said object or vehicle, a series of pressure sensors which are arranged on an outer surface of said center shaft and are distributed over a circumferential area of said center shaft, an elastically deformable sleeve which is arranged substantially around said center shaft and said series of pressure sensors, and a substantially rigid cylinder which is arranged around said elastically deformable sleeve, wherein the elastically deformable sleeve is arranged in contact with the outer surface of the center shaft and with an inner surface of the cylinder.

## Claims

1. An actuating device (1) for manually actuating driving and steering means for a wheeled power driven object or vehicle, said actuating device comprising:
a substantially rigid center shaft (2),
a series of pressure sensors (11, 12, 13, 14),
an elastically deformable member which is arranged substantially around said center shaft (2), and
a substantially rigid cylinder (5) which is arranged around said elastically deformable member, wherein the elastically deformable member is arranged in contact with the outer surface of the center shaft (2) and with an inner surface of the cylinder (5), **characterized in that**
the center shaft (2) is arranged for rigid attachment to said object or vehicle,
the series of pressure sensors (11, 12, 13, 14) are arranged on an outer surface of said center shaft (2) and are distributed over a circumferential area of said center shaft (2),
the elastically deformable member is an elastically deformable sleeve (3) is arranged substantially around said series of pressure sensors (11, 12, 13, 14), and,
wherein the pressure sensors (11, 12, 13, 14) of said series of pressure sensors are arranged at a distance from the elastically deformable sleeve (3), at least when no manually actuating force is applied on the substantially rigid cylinder (5).

2. Actuating device according to claim 1, wherein the substantially rigid center shaft (2) comprises a square shaped cross section.

3. Actuating device according to claim 2, wherein the series of pressure sensors comprises four pressure sensors (11, 12, 13, 14), wherein at each substantially flat outer side surface of said square shaped center shaft (2), one of said pressure sensors is arranged.

4. Actuating device according to any one of the claims 1 - 3, wherein the elastically deformable sleeve (3) is arranged to substantially fill the space between the outer surface of the center shaft (2) and the an inner surface of the cylinder (5), at least above and/or below said circumferential area.

5. Actuating device according to any one of the claims 1 - 4, wherein the substantially rigid cylinder (5) is movably attached to the center shaft (2), at least at a position at a distance above or below said circumferential area.

6. Actuating device according to claim 5, wherein the rigid cylinder (5) is attached to the center shaft (2) by means of a ball-and-socket joint (6).

7. Actuating device according to claim 6, wherein said actuating device comprises a ball member (7) which is attached to the center shaft (2) at a distance above or below said circumferential area, and wherein the substantially rigid cylinder (5) comprises a socket member (8) which is arranged at least partially around said ball member (7).

8. Actuating device according to any one of the claims 1 - 7, wherein elastically deformable sleeve (3) comprises a silicone-rubber sleeve.

9. Actuating device according to any one of the claims 1 - 8, wherein each pressure sensor (11, 12, 13, 14) of said series of pressure sensors comprises a strip of foil material comprising an electrical resistance which varies dependent on a pressure force applied to the surface of said strip.

10. Patient transport device (40; 50), comprising:
a chassis (41, 42, 46; 51),
one or more support wheels (43, 44, 47; 52) for supporting the chassis on a ground,
at least one drive wheel (47; 53, 53') provided with an electric motor for driving and/or steering said patient transport device (40; 50), and
a control system (48; 55) for controlling power supply to the electric motors, wherein said control system comprises at least one actuating device (481, 482; 551, 552) according to any one of the claims 1 - 9.

11. Patient transport device according to claim 10, wherein the center shaft (2) is rigidly attached to said chassis (46; 51), or is a part of said chassis.

12. Patient transport device according to claim 10 or 11, wherein the control system (48; 55) comprises a pair of mutually spaced actuating devices (481, 482; 551, 552) according to any one of the claims 1 - 9.

13. Patient transport device according to claim 10, 11, or 12, wherein the patient transport device comprises a patient lifting device (40) or a hospital bed (50).

14. Use of an actuating device (1) according to any one of the claims 1 - 9 for controlling power supply to the electric motors of a patient transport device (40, 50) according to any one of the claims 10 - 13.

## Patentansprüche

1. Eine Betätigungsvorrichtung (1) für das manuelle Betätigen einer Fahr- und Steuervorrichtung für ein mit Rädern versehenes Objekt oder Fahrzeug mit Motorantrieb, wobei die Betätigungsvorrichtung umfasst:
einen im Wesentlichen starren zentralen Schaft (2),
eine Reihe von Drucksensoren (11, 12, 13, 14),
ein elastisch deformierbares Element, das im Wesentlichen um den zentralen Schaft (2) herum angeordnet ist, und
einen im Wesentlichen starren Zylinder (5), der um das elastisch deformierbare Element herum angeordnet ist, wobei das elastisch deformierbare Element in Kontakt mit der äußeren Oberfläche des zentralen Schafts (2) und mit einer inneren Oberfläche des Zylinders (5) angeordnet ist, **dadurch gekennzeichnet, dass**
der zentrale Schaft (2) für einen festen Anbau an das Objekt oder das Fahrzeug angeordnet ist,
die Reihe von Drucksensoren (11, 12, 13, 14) an einer äußeren Oberfläche des zentralen Schafts (2) angeordnet sind und über einen ringsumlaufenden Bereich des zentralen Schafts (2) verteilt sind,
das elastisch deformierbare Element eine elastisch deformierbare Hülse (3) ist, die im Wesentlichen um die Reihe von Drucksensoren (11, 12, 13, 14) angeordnet ist, und,
wobei die Drucksensoren (11, 12, 13, 14) dieser Reihe von Drucksensoren in einem Abstand von der elastisch deformierbaren Hülse (3) angeordnet sind, wenigstens wenn keine manuelle Betätigungskraft auf den im Wesentlichen festen Zylinder (5) ausgeübt wird.

2. Betätigungsvorrichtung gemäß Anspruch 1, wobei der im Wesentlichen feste zentrale Schaft (2) einen quadratisch geformten Querschnitt aufweist.

3. Betätigungsvorrichtung gemäß Anspruch 2, wobei die Reihe von Drucksensoren vier Drucksensoren (11, 12, 13, 14) umfasst, wobei an jeder, im Wesentlichen flachen äußeren seitlichen Oberfläche des quadratisch geformten zentralen Schafts (2) einer dieser Drucksensoren angeordnet ist.

4. Betätigungsvorrichtung gemäß einem der Ansprüche 1-3, wobei die elastisch deformierbare Hülse (3) angeordnet ist, um den Raum zwischen der äußeren Oberfläche des zentralen Schafts (2) und der inneren Oberfläche des Zylinders (5) im Wesentlichen auszufüllen, wenigstens oberhalb und/oder oberhalb des rundumlaufenden Bereichs.

5. Betätigungsvorrichtung gemäß einem der Ansprüche 1-4, wobei der im Wesentlichen feste Zylinder (5) an dem zentralen Schaft (2), wenigstens an einer Position in einem Abstand oberhalb oder unterhalb des rundumlaufenden Bereichs beweglich angebracht ist.

6. Betätigungsvorrichtung gemäß Anspruch 5, wobei der feste Zylinder (5) an dem zentralen Schaft (2) mithilfe eines Kugelgelenks (6) angebracht ist

7. Betätigungsvorrichtung gemäß Anspruch 6, wobei die Betätigungsvorrichtung ein Kugelelement (7) umfasst, das an dem zentralen Schaft (2) mit einem Abstand oberhalb oder unterhalb von dem rundumlaufenden Bereich angebracht ist, und wobei der im Wesentlichen starre Zylinder (5) ein Fassungselement (8) umfasst, das wenigstens teilweise um das Kugelelement (7) herum angeordnet ist.

8. Betätigungsvorrichtung gemäß einem der Ansprüche 1-7, wobei die elastisch deformierbare Hülse (3) eine Silicongummihülse umfasst.

9. Betätigungsvorrichtung gemäß einem der Ansprüche 1-8, wobei jeder Drucksensor (11, 12, 13, 14) der Reihe von Drucksensoren einen Streifen eines Folienmaterials, das einen elektrischen Widerstand aufweist, der abhängig von einer Druckkraft, die auf die Oberfläche dieses Streifens angewandt wird, variiert, enthält.

10. Patiententransportvorrichtung (40; 50), umfassend:
ein Fahrgestell (41, 42, 46; 51),
einen oder mehrere Stützräder (43, 44, 47; 52) zum Abstützen des Fahrgestells auf einem Boden,
wenigstens ein Antriebsrad (47; 53, 53'), das mit einem elektrischen Motor für das Antreiben und/oder Steuern der Patiententransportvorrichtung (40; 50) ausgestattet ist, und
ein Steuersystem (48; 55) für das Steuern der Energieversorgung für die elektrischen Motoren, wobei dieses Kontrollsystem wenigstens eine Betätigungsvorrichtung (481, 482; 551, 552) gemäß einem der Ansprüche 1-9 umfasst.

11. Patiententransportvorrichtung gemäß Anspruch 10, wobei der zentrale Schaft (2) an das Fahrgestell (46; 51) fest angebracht ist oder Teil dieses Fahrgestells ist.

12. Patiententransportvorrichtung gemäß Anspruch 10 oder 11, wobei das Steuersystem (48; 55) ein Paar gegenseitig beabstandeter Betätigungsvorrichtungen (481, 482; 551, 552) gemäß einem der Ansprüche 1-9 umfasst.

13. Patiententransportvorrichtung gemäß Anspruch 10, 11 oder 12, wobei die Patiententransportvorrichtung eine Vorrichtung zum Anheben des Patienten (40) oder ein Krankenhausbett (5) umfasst.

14. Verwendung einer Betätigungsvorrichtung (1) gemäß einem der Ansprüche 1-9 zur Steuerung der Energieversorgung für die elektrischen Motoren einer Patiententransportvorrichtung (40, 50) gemäß einem der Ansprüche 10-13.

## Revendications

1. Dispositif d'actionnement (1) pour actionner manuellement des moyens d'entraînement et de direction pour un objet ou un véhicule entraîné par des roues, ledit dispositif d'actionnement comprenant:
un arbre central sensiblement rigide (2),
une série de capteurs de pression (11, 12, 13, 14),
un organe déformable élastiquement qui est agencé sensiblement autour dudit arbre central (2), et
un cylindre sensiblement rigide (5) qui est agencé autour dudit organe déformable élastiquement, l'organe déformable élastiquement étant agencé en contact avec la surface externe de l'arbre central (2) et avec une surface interne du cylindre (5), **caractérisé en ce que**
l'arbre central (2) est agencé pour être solidarisé audit objet ou véhicule,
la série de capteurs de pression (11, 12, 13, 14) est agencée sur une surface externe dudit arbre central (2) et est répartie sur une zone circonférentielle dudit arbre central (2),
l'organe déformable élastiquement est un manchon déformable élastiquement (3) agencé sensiblement autour de ladite série de capteurs de pression (11, 12, 13, 14), et,
les capteurs de pression (11, 12, 13, 14) de ladite série de capteurs de pression étant agencés à une distance du manchon déformable élastiquement (3), au moins lorsqu'aucune force d'actionnement manuelle n'est appliquée sur le cylindre sensiblement rigide (5).

2. Dispositif d'actionnement selon la revendication 1, dans lequel l'arbre central (2) sensiblement rigide présente une section centrale de forme carrée.

3. Dispositif d'actionnement selon la revendication 2, dans lequel la série de capteurs de pression comprend quatre capteurs de pression (11, 12, 13, 14), un desdits capteurs de pression étant agencé au niveau de chaque surface latérale externe sensiblement plate dudit arbre central (2) de forme carrée.

4. Dispositif d'actionnement selon l'une quelconque des revendications 1 à 3, dans lequel le manchon déformable élastiquement (3) est agencé pour remplir sensiblement l'espace entre la surface externe de l'arbre central (2) et la surface interne du cylindre (5), au moins au-dessus et/ou au-dessous de ladite zone circonférentielle.

5. Dispositif d'actionnement selon l'une quelconque des revendications 1 à 4, dans lequel le cylindre sensiblement rigide (5) est fixé mobile à l'arbre central (2), au moins en une position à une distance au-dessus ou au-dessous de ladite zone circonférentielle.

6. Dispositif d'actionnement selon la revendication 5, dans lequel le cylindre rigide (5) est fixé à l'arbre central (2) au moyen d'un joint à rotule (6).

7. Dispositif d'actionnement selon la revendication 6, dans lequel ledit dispositif d'actionnement comprend un organe boule (7) qui est fixé à l'arbre central (2) à une distance au-dessus ou au-dessous de ladite zone circonférentielle, et le cylindre sensiblement rigide (5) comprenant un organe douille (8) qui est agencé, au moins en partie, autour dudit organe boule (7).

8. Dispositif d'actionnement selon l'une quelconque des revendications 1 à 7, dans lequel le manchon déformable élastiquement (3) comprend un manchon de caoutchouc silicone.

9. Dispositif d'actionnement selon l'une quelconque des revendications 1 à 8, dans lequel chaque capteur de pression (11, 12, 13, 14) de ladite série de capteurs de pression comprend une bande de matériau en feuille comprenant une résistance élastique qui varie en fonction de la force de pression appliquée sur la surface de ladite bande.

10. Dispositif de transport de patient (40 ; 50), comprenant :
un châssis (41, 42, 46 ; 51),
une ou plusieurs roues de support (43, 44, 47 ; 52) pour supporter le châssis sur un sol,
au moins une roue d'entraînement (47 ; 53, 53') dotée d'un moteur électrique pour entraîner et/ou diriger ledit dispositif de transport de patient (40 ; 50), et
un système de commande (48 ; 55) pour commander l'alimentation des moteurs électriques, ledit système de commande comprenant au moins un dispositif d'actionnement (481, 482 ; 551, 552) selon l'une quelconque des revendications 1 à 9.

11. Dispositif de transport de patient selon la revendication 10, dans lequel l'arbre central (2) est solidarisé audit châssis (46 ; 51), ou fait partie dudit châssis.

12. Dispositif de transport de patient selon la revendication 10 ou 11, dans lequel le système de commande (48 ; 55) comprend une paire de dispositifs d'actionnement espacés l'un de l'autre (481, 482 ; 551, 552) selon l'une quelconque des revendications 1 à 9.

13. Dispositif de transport de patient selon la revendication 10, 11, ou 12, dans lequel le dispositif de transport de patient comprend un dispositif de levage de patient (40) ou un lit d'hôpital (50).

14. Utilisation d'un dispositif d'actionnement (1) selon l'une quelconque des revendications 1 à 9 pour commander l'alimentation des moteurs électriques d'un dispositif de transport de patient (40 ; 50) selon l'une quelconque des revendications 10 à 13.
